(19) Europäisches Patentamt
European Patent Office
Office européen des brevets

(11) **EP 2 763 276 A1**

(12) **EUROPÄISCHE PATENTANMELDUNG**

(43) Veröffentlichungstag:
06.08.2014 Patentblatt 2014/32

(51) Int Cl.:
*H02J 7/34* (2006.01)          *B60L 7/10* (2006.01)

(21) Anmeldenummer: **13153497.6**

(22) Anmeldetag: **31.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Schierling, Hubert**
**91052 Erlangen (DE)**

(54) **Umrichter und Verfahren zum Betrieb eines solchen**

(57)     Für den Betrieb eines Umrichters (1) mit mindestens einem Umrichtermodul (2), das einen Primärschaltkreis (3) zum Anschluss an ein Spannungsnetz (7), einen Sekundärschaltkreis (4) zum Anschluss an eine Last (17) und einen zwischengeschalteten Spannungszwischenkreis (5) mit einer Zwischenkreiskapazität (22) umfasst, wird verfahrensgemäß die über der Zwischenkreiskapazität (22) abfallende Zwischenkreisspannung ($U_Z$) durch Steuerung des Primärschaltkreises (3) auf einen vorgegebenen Spannungssollwert ($U_0, U_{01}-U_{03}$) geregelt. Dabei wird der Spannungssollwert ($U_0, U_{01}-U_{03}$) in Abhängigkeit von der Richtung des Leistungsflusses in dem Sekundärschaltkreis (4) variabel vorgegeben.

FIG 2

EP 2 763 276 A1

**Beschreibung**

Die Erfindung bezieht sich auf einen Umrichter mit mindestens einem Umrichtermodul, vorzugsweise aber mehreren Umrichtermodulen. Die Erfindung bezieht sich des Weiteren auf ein Verfahren zum Betrieb eines solchen Umrichters.

Umrichter werden in der elektrischen Antriebstechnik zur Versorgung einer elektrischen Last, insbesondere eines Elektromotors mit elektrischer Leistung aus einem (Spannungs-)Netz eingesetzt. Ein beispielhaftes Anwendungsgebiet für Umrichter ist hierbei die Versorgung des Antriebsmotors oder der Antriebsmotoren eines Elektro-Fahrzeugs. Bei dem Spannungsnetz handelt es sich in diesem Fall um den - gleichstromführenden - Batteriekreis einer Traktionsbatterie des Fahrzeugs. Im stationären Einsatz ist die Primärseite des Umrichters dagegen meist an ein ein- oder mehrphasiges Wechselspannungsnetz angeschlossen.

Ein Umrichter umfasst üblicherweise einen Primärschaltkreis zum Anschluss an das Netz sowie einen Sekundärschaltkreis zum Anschluss an die Last. Der Primärschaltkreis und der Sekundärschaltkreis sind über einen (Spannungs-)Zwischenkreis miteinander verbunden, in den eine Zwischenkreiskapazität geschaltet ist. Je nach Art des primärseitig anzuschließenden Netzes ist der Primärschaltkreis als Gleichstromsteller oder Stromrichter (Gleichrichter) ausgeführt. Bei dem Sekundärschaltkreis handelt es sich üblicherweise um einen Wechselrichter in Form einer ein- oder mehrphasigen Vollbrückenschaltung.

Die aus dem Primärschaltkreis, dem Sekundärschaltkreis und dem Zwischenkreis (mit der darin angeordneten Zwischenkreiskapazität) gebildete Baueinheit ist nachfolgend auch als "Umrichtermodul" bezeichnet. Insbesondere in der Kraftfahrzeugantriebstechnik kommen modulare Umrichter zum Einsatz, bei denen mehrere solcher Umrichtermodule primärseitig in Serie geschaltet sind. Ein solcher modularer Umrichter ist beispielsweise aus der Veröffentlichung Lukas Lambertz et al. "Modularer Hochfrequenzumrichter für Fahrzeugantriebe", EMA 2010, 08.-09.09.2010, Aschaffenburg, bekannt.

Elektromotoren und andere durch Umrichter versorgte Lasten haben häufig einen Leistungsfaktor, der den Wert Eins (100%) deutlich unterschreitet. Im Betrieb einer solchen Last kommt es regelmäßig zu einer periodischen Richtungsumkehr des momentanen Leistungsflusses in dem Sekundärschaltkreis des an die Last angeschlossenen Umrichtermoduls. Das Umrichtermodul erfährt somit während jeder Periode der an die Last abgegebenen Ausgangsspannung einen ein- oder mehrfachen Wechsel zwischen "motorischem Leistungsfluss", bei dem elektrische Leistung aus dem Zwischenkreis an die Last abgegeben wird, und "generatorischem Leistungsfluss", bei dem die Last elektrische Leistung in den Zwischenkreis zurückspeist.

Die zurückgespeiste elektrische Leistung muss, wenn sie nicht oder nicht schnell genug an das Netz abgegeben werden kann, in der Zwischenkreiskapazität gespeichert werden. Dies kann, wenn die Zwischenkreiskapazität nicht hinreichend groß dimensioniert ist, zu einer unzulässigen Überhöhung der Zwischenkreisspannung und somit zu einer Überbelastung oder gar Beschädigung des Umrichters führen. Groß ausgelegte Zwischenkreiskapazitäten wirken sich allerdings ungünstig auf den Bauraumbedarf, die Herstellungskosten und das Gewicht des Umrichters aus.

Der Erfindung liegt die Aufgabe zugrunde, einen (insbesondere modularen) Umrichter in Hinblick auf den Bauraumbedarf, die Herstellungskosten und/oder das Gewicht zu verbessern, ohne das Risiko einer Überlastung des oder jeden Umrichtermoduls in Kauf nehmen zu müssen.

Bezüglich eines Verfahrens zum Betrieb eines Umrichters wird diese Aufgabe erfindungsgemäß gelöst durch die Merkmale des Anspruchs 1. Bezüglich eines Umrichters wird diese Aufgabe erfindungsgemäß gelöst durch die Merkmale des Anspruchs 8 sowie unabhängig hiervon durch die Merkmale des Anspruchs 9. Vorteilhafte und teils für sich gesehen erfinderische Ausgestaltungsformen und Weiterentwicklungen der Erfindung sind in den Unteransprüchen und der nachfolgenden Beschreibung dargelegt.

Die Erfindung geht aus von einem Umrichter mit mindestens einem Umrichtermodul. Das oder jedes Umrichtermodul umfasst hierbei einen Primärschaltkreis zum Anschluss an ein Spannungsnetz sowie einen Sekundärschaltkreis zum Anschluss an eine Last. Das oder jedes Umrichtermodul umfasst des Weiteren einen (Spannungs-)Zwischenkreis, der dem Primärschaltkreis und dem Sekundärschaltkreis zwischengeschaltet ist, und in den eine Zwischenkreiskapazität in Form eines Kondensators oder mehrerer Kondensatoren geschaltet ist.

Der erfindungsgemäße Umrichter ist insbesondere zum Einsatz in dem Fahrzeugantrieb eines Elektrofahrzeugs vorgesehen. Der Primärschaltkreis ist daher vorzugsweise zum Anschluss an den Batteriekreis einer Traktionsbatterie des Fahrzeugs als Spannungsnetz vorgesehen. Entsprechend handelt es sich bei dem Primärschaltkreis vorzugsweise um einen Gleichstromsteller. Bei der an das Umrichtermodul sekundärseitig anzuschließenden Last handelt es sich vorzugsweise um einen Elektromotor oder um eine Phasenwicklung eines solchen. Entsprechend ist der Sekundärschaltkreis vorzugsweise als ein- oder mehrphasige Vollbrückenschaltung ausgebildet.

Das erfindungsgemäße Verfahren kann aber auch bei Umrichtern für andere Anwendungsgebiete eingesetzt werden, insbesondere Umrichtern, deren Primärseite zum Anschluss an ein dreiphasiges Drehstromnetz ausgebildet ist.

In einem speziellen Anwendungsfall kommt das erfindungsgemäße Verfahren bei Umrichtern zum Einsatz, deren Primärschaltkreis als Einquadrantensteller ausgebildet ist und somit nur eine Leistungsflussrichtung bedienen kann. In einem weiteren Anwendungsfall kommt das erfindungsgemäße Verfahren bei Umrichtern zum Einsatz, deren Primärseite zwar grundsätzlich rückspeisefähig ausgelegt sind, bei denen aber der oder jeder Primärschaltkreis nicht schnell genug an eine kurzzeitige Umkehr der Leistungsflussrichtung anpassbar ist. Das Verfahren ist allerdings nicht auf diese Anwendungsfälle beschränkt.

Im Zuge des Verfahrens wird für das oder jedes Umrichtermodul die über der Zwischenkreiskapazität abfallende Zwischenkreisspannung durch Steuerung des Primärschaltkreises auf einen vorgegebenen Spannungssollwert geregelt. Dieser Spannungssollwert wird dabei erfindungsgemäß nicht fest vorgegeben, sondern in Abhängigkeit von der Richtung des Leistungsflusses in dem Sekundärschaltkreis variiert.

Die variable Steuerung des Spannungssollwerts und damit der Zwischenkreisspannung ermöglicht es, die Zwischenkreiskapazität auf eine zu erwartende Umkehr der Leistungsflussrichtung vorzubereiten, so dass das Speichervermögen des Kondensators besonders gut ausgenutzt werden kann. Insbesondere wird die Zwischenkreiskapazität dabei durch Absenkung der Zwischenkreisspannung entladen, bevor sie rückgespeiste Leistung aufnehmen muss. Zusätzlich oder alternativ wird die Zwischenkreiskapazität durch Erhöhung der Zwischenkreisspannung geladen, bevor sie Leistung an die Last abgeben muss. Hierdurch kann die Zwischenkreiskapazität besonders klein ausgelegt werden, ohne das Risiko einer Überbelastung des Umrichtermoduls durch Spannungsspitzen im Zwischenkreis in Kauf nehmen zu müssen.

In vorteilhafter Ausführung des Verfahrens wird bei überwiegend motorischem Leistungsfluss - also in einem Betriebsmodus des Umrichters, bei dem im zeitlichen Durchschnitt mehr Leistung an die Last abgegeben als von der Last zurückgespeist wird - der Spannungssollwert vorauseilend zu dem Beginn einer generatorischen Leistungsflussphase erniedrigt. Hierdurch wird sichergestellt, dass die Zwischenkreiskapazität zu Beginn der generatorischen Leistungsflussphase zumindest teilweise entladen ist und die zugeführte Leistung ohne unzulässige Spannungsänderung aufnehmen kann. Dabei wird der Spannungssollwert vorzugsweise dem zeitabhängigen Absolutwert der von dem sekundärseitigen Stromrichter eingestellten Ausgangsspannung nachgeführt. Der Spannungssollwert wird also an den zeitlichen Verlauf der gleichgerichteten Ausgangsspannung - zweckmäßigerweise zuzüglich eines vorgegebenen Sicherheitsaufschlags (Spannungs-Offsets)- angepasst.

Alternativ hierzu wird der Spannungssollwert mit hinreichendem zeitlichen Abstand zu dem Beginn der generatorischen Leistungsflussphase auf einen Wert abgesenkt, der nach Maßgabe der Blindleistung der Last und des Kapazitätswerts der Zwischenkreiskapazität derart berechnet wird, dass die Zwischenkreisspannung während der generatorischen Leistungsflussphase einen zulässigen Maximalwert der Zwischenkreisspannung gerade nicht überschreitet.

Bei vorwiegend generatorischem Leistungsfluss - also in einem Betriebsmodus des Umrichters, in dem in den Zwischenkreis des Umrichtermoduls im zeitlichen Durchschnitt mehr Leistung durch die Last eingespeist als aus dem Zwischenkreis an die Last abgegeben wird - wird der Spannungssollwert exakt oder zumindest näherungsweise auf einen zulässigen Maximalwert der Zwischenkreisspannung angehoben. Hierdurch wird sichergestellt, dass die Last in kurzzeitigen motorischen Leistungsflussphasen aus der ganz oder zumindest nahezu vollständig geladenen Zwischenkreiskapazität ausreichend mit Leistung versorgt werden kann.

Vorzugsweise handelt es sich bei dem Umrichter um einen modularen Umrichter, der mehrere Umrichtermodule der vorstehend beschriebenen Art umfasst. In Anwendung des erfindungsgemäßen Verfahrens auf einen solchen Umrichter wird zweckmäßigerweise für jedes der mehreren Umrichtermodule individuell nach dem vorstehend beschriebenen Verfahren ein modulspezifischer Spannungssollwert bestimmt. Die Zwischenkreisspannung wird also in jedem Umrichtermodul grundsätzlich individuell geregelt, wobei der jeweilige Spannungssollwert in Abhängigkeit von der Leistungsflussrichtung in dem jeweiligen Umrichtermodul variiert wird.

In einer vorteilhaften Weiterentwicklung dieses Verfahrens werden die für die einzelnen Umrichtermodule bestimmten Spannungssollwerte zusätzlich nach Maßgabe eines gemeinsamen Korrekturterms modifiziert. Dieser Korrekturterm ist dabei derart bestimmt, dass die Summenleistung aller Umrichtermodule auf einen vorgegebenen Summenleistungssollwert geregelt wird. Die Summenleistung ist dabei insbesondere auf die Eingangsleistung der Umrichtermodule bezogen. Der Begriff Summenleistung bezeichnet somit insbesondere die elektrische Leistung, die insgesamt zwischen den Umrichtermodulen einerseits und dem Netz andererseits ausgetauscht wird. Hierdurch wird die von dem Umrichter aus dem Netz bezogene oder in das Netz rückgespeiste Leistung weitgehend konstant gehalten und mithin eine hohe Netzverträglichkeit des Umrichters erzielt.

In zweckmäßiger Ausgestaltung führt der erfindungsgemäße Umrichter das vorstehend beschriebene Verfahren automatisch durch. Er umfasst hierzu eine Steuereinrichtung, die schaltungs- und/oder programmtechnisch zur Durchführung des erfindungsgemäßen Verfahrens in einer der vorstehend beschriebenen Ausführungsvarianten eingerichtet ist. Die Steuereinrichtung umfasst dabei insbesondere einen Mikrocontroller, in dem ein das Verfahren in Betrieb des Umrichters automatisch durchführendes Steuerprogramm (Firmware) lauffähig implementiert ist. Alternativ oder zusätzlich kann die Steuereinrichtung mindestens einen nicht-programmierbaren Hardware-Schaltkreis (z.B. einen ASIC) umfassen, in dem die Funktion zur Durchführung des Verfahrens oder eines Teils davon mit schaltungstechnischen Mitteln implementiert ist.

Sofern der Umrichter mehrere Umrichtermodule aufweist, ist die Steuereinrichtung dabei insbesondere dazu eingerichtet, für jedes Umrichtermodul den modulspezifischen Spannungssollwert individuell zu bestimmen und - optional - zusätzlich die modulspezifischen Spannungssollwerte nach Maßgabe des gemeinsamen Korrekturterms zur Regelung der Summenleistung auf den vorgegebenen Summenleistungssollwert zu modifizieren.

Auch bei mehreren Umrichtermodulen kann die Steuereinrichtung im Rahmen der Erfindung durch eine einzige, alle Umrichtermodule ansteuernde Steuereinheit gebildet sein, beispielsweise also durch einen einzigen Mikrocontroller. Alternativ oder zusätzlich hierzu kann die Steuereinrichtung im Rahmen der Erfindung aber auch ganz oder teilweise dezentral strukturiert sein, indem jedem Umrichtermodul (zumindest auch) eine eigene Steuereinheit zugeordnet ist.

Nachfolgend werden Ausführungsbeispiele der Erfindung anhand einer Zeichnung näher erläutert. Darin zeigen:

FIG 1    in einem schematisch vereinfachten Schaltbild einen Umrichter mit einem Umrichtermodul, das einen Primärschaltkreis zum Anschluss an ein Spannungsnetz, einen Sekundärschaltkreis zum Anschluss an eine Last, einen zwischengeschalteten Spannungszwischenkreis sowie eine Steuereinrichtung umfasst, wobei der Primärschaltkreis durch einen Einquadrantensteller (Tiefsetzsteller) gebildet ist,

FIG 2    in zwei übereinander angeordneten, synchronen Diagrammen für einen überwiegend motorischen Betrieb des Umrichters gemäß FIG 1 einen beispielhaften Verlauf einer von dem Sekundärschaltkreis an die Last ausgegebenen Ausgangsspannung, eines durch die Last fließenden Laststroms und der durch den Sekundärschaltkreis fließenden elektrischen Ausgangsleistung (unteres Diagramm) sowie den Verlauf des Absolutwertes der Ausgangsspannung, eines Spannungssollwerts für die Regelung einer Zwischenkreisspannung sowie der Zwischenkreisspannung (oberes Diagramm),

FIG 3    in Darstellung gemäß FIG 1 eine alternative Ausführungsform des Umrichters, bei der der Primärschaltkreis durch einen Zweiquadrantensteller gebildet ist,

FIG 4    in Darstellung gemäß FIG 2 für einen überwiegend generatorischen Betrieb des Umrichters gemäß FIG 3 den zeitlichen Verlauf der Ausgangsspannung, des Laststroms und der Ausgangsleistung (unteres Diagramm) sowie des Spannungssollwertes und der Zwischenkreisspannung (oberes Diagramm), und

FIG 5    in Darstellung gemäß FIG 1 eine weitere Ausführungsform des Umrichters mit mehreren Umrichtermodulen gemäß FIG 3.

Einander entsprechende Teile und Größen sind in allen Figuren stets mit gleichen Bezugszeichen versehen.

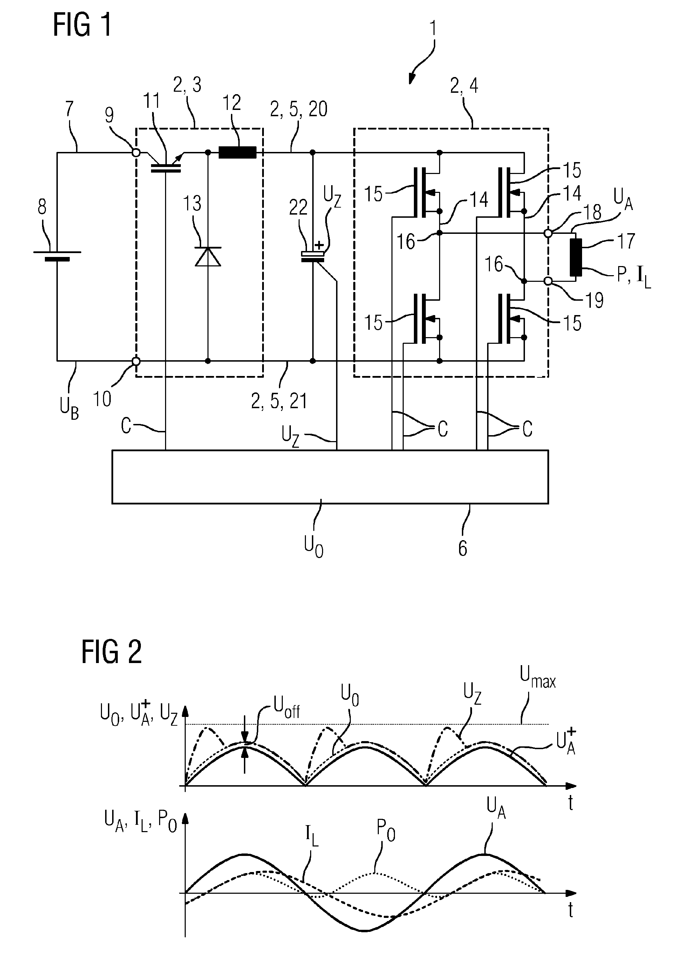

FIG 1 zeigt einen Umrichter 1 mit einem einzigen (Umrichter-) Modul 2, das durch einen Primärschaltkreis 3, einen Sekundärschaltkreis 4 und einen Zwischenkreis 5 gebildet ist. Der Umrichter 1 umfasst des Weiteren eine Steuereinrichtung 6.

Der Primärschaltkreis 3 ist zum eingangsseitigen Anschluss an ein (Spannungs-)Netz 7 ausgebildet, bei dem es sich im dargestellten Beispiel um ein durch eine Batterie 8 gespeistes Gleichspannungsnetz handelt, und über das dem Primärschaltkreis 3 über Eingangsklemmen 9 und 10 eine Batteriespannung $U_B$ zugeführt ist.

Entsprechend ist der Primärschaltkreis 3 als Gleichstromsteller ausgebildet. Konkret handelt es sich bei dem Primärschaltkreis 3 im Ausführungsbeispiel gemäß FIG 1 um einen Einquadrantensteller in Form eines einfachen Tiefsetzstellers. Der Primärschaltkreis 3 wird hierbei im Wesentlichen gebildet durch einen über die Eingangsklemme 9 mit dem Pluspol der Batterie 8 verschalteten Halbleiterschalter 11 (der hier als IGBT ausgeführt ist) und eine hierzu in Reihe geschaltete Induktivität 12. Der Primärschaltkreis 3 umfasst des Weiteren eine Diode 13, die in Sperrrichtung zwischen den Emitter des Halbleiterschalters 11 und die mit dem Minuspol der Batterie 8 verbundene Eingangsklemme 10 geschaltet ist.

Der Sekundärschaltkreis 4 ist durch eine einphasige Vollbrückenschaltung (H-Brücke) gebildet. Diese besteht in bekannter Weise aus zwei parallelgeschalteten Halbbrücken 14. Jede Halbbrücke 14 umfasst zwei in Serie geschaltete Halbleiterschalter 15 (hier in Form von MOS-FETs). Ein innerhalb jeder Halbbrücke 14 zwischen den dortigen Halbleiterschaltern 15 angeordneter Mittelabgriff 16 ist hierbei jeweils zum Anschluss einer (hier einphasigen) Last 17 mit einer Ausgangsklemme 18 bzw. 19 des Sekundärschaltkreises 4 verbunden, und gibt im Betrieb eine Ausgangsspannung $U_A$ an die Last 17 aus. Abweichend von der Darstellung gemäß FIG 1 kann der Sekundärschaltkreis 4 auch - für die Versorgung einer mehrphasigen (insbesondere dreiphasigen) Last - durch eine mehrphasige Vollbrückenschaltung gebildet sein.

Durch den Zwischenkreis 5 sind der Primärschaltkreis 3 und der Sekundärschaltkreis 4 miteinander verbunden. Der Zwischenkreis 5 umfasst hierzu eine Plusschiene 20 und eine Minusschiene 21, zwischen die eine (Zwischenkreis-)Kapazität 22 in Form von einem oder mehreren Kondensatoren geschaltet ist. Die über der Kapazität 22 abfallende Spannung ist als Zwischenkreisspannung $U_Z$ bezeichnet.

Die Steuereinrichtung 6 ist im dargestellten Beispiel durch einen Mikrocontroller gebildet, in dem ein Steuerprogramm zum automatischen Betrieb des Umrichters 1 softwaretechnisch implementiert ist.

Der Umrichter 1 ist insbesondere im Rahmen eines Antriebssystems für ein Elektrofahrzeug (Elektroauto) vorgesehen. Bei der Batterie 8 handelt es sich daher insbesondere um die Antriebsbatterie (Traktionsbatterie) des Fahrzeugs. Bei der Last 17 handelt es sich entsprechend insbesondere um den elektrischen Antriebsmotor des Fahrzeugs oder um eine Phasenwicklung desselben.

Beim Ablauf des Steuerprogramms werden durch die Steuereinrichtung 6 der Halbleiterschalter 11 des Primärschaltkreises 3 sowie die Halbleiterschalter 15 des Sekundärschaltkreises 4 gesteuert. Die Gate-Anschlüsse der Halbleiterschalter 11 und 15 sind hierzu mit der der Steuereinrichtung 6 zur Zuführung von Schaltsignalen C verschaltet. Der Steuereinrichtung 6 ist ferner ein Messwert der Zwischenkreisspannung $U_Z$ zugeführt.

Im Betrieb des Umrichters 1 erzeugt die Steuereinrichtung 6 durch entsprechend pulsweitenmodulierte (und somit getaktete) Ansteuerung der Halbleiterschalter 15 die Ausgangsspannung $U_A$ als Wechselspannung mit einer sinusförmigen Abhängigkeit von der Zeit t. Der zeitliche Verlauf der Ausgangsspannung $U_A$ ist im unteren Diagramm der FIG 2 mit durchgezogener Linie eingetragen.

Die Ausgangsspannung $U_A$ ruft einen durch die Last 17 fließenden Laststrom $I_L$ hervor, dessen ebenfalls sinusförmiger Verlauf im unteren Diagramm der FIG 2 mit gestrichelter Linie eingetragen ist. Aufgrund induktiven Charakters der Last 17 läuft der Laststrom $I_L$ der Ausgangsspannung $U_A$ nach. Dies führt zu einem - mit gegenüber der Ausgangsspannung $U_A$ doppelter Frequenz - oszillierenden Verlauf der von dem Sekundärschaltkreis 4 an die Last 17 abgegebenen (Ausgangs-)Leistung $P_O$ (vgl. gepunktete Linie im unteren Diagramm der FIG 2), die durch das Produkt der Momentanwerte der Ausgangsspannung $U_A$ und des Laststroms $I_L$ gegeben ist:

$$P_O(t) = U_A(t) \cdot I_L(t)$$

Wie FIG 2 zu entnehmen ist, wechselt die Leistung $P_O$ während jeder Periode der Ausgangsspannung $U_A$ vierfach das Vorzeichen. Der Betrag der Leistung $P_O$ ist hierbei überwiegend positiv. Dies entspricht einem motorischen Leistungsfluss, bei dem elektrische Leistung von dem Sekundärschaltkreis 4 an die Last 17 abgegeben wird. Diese motorischen Leistungsflussphasen sind allerdings unterbrochen von kurzzeitigen generatorischen Leistungsflussphasen, in denen der Betrag der Leistung $P_O$ negativ ist und in denen somit elektrische Leistung von der Last 17 in den Zwischenkreis 5 zurückgespeist wird.

Der Halbleiterschalter 11 des Primärkreises 3 wird von der Steuereinrichtung 6 ebenfalls pulsweitenmoduliert (und somit getaktet) angesteuert, so dass die über der Kapazität 22 abfallende Zwischenkreisspannung $U_Z$ auf einen Spannungssollwert $U_0$ geregelt wird.

In seiner Eigenschaft als Einquadrantensteller kann der Primärschaltkreis 3 bei dem Ausführungsbeispiel gemäß FIG 1 elektrische Leistung allerdings lediglich von dem Netz 7 in den Zwischenkreis 5 transportieren, nicht aber umgekehrt. Die von der Last 17 in den generatorischen Leistungsflussphasen in den Zwischenkreis 5 rückgespeiste Leistung $P_O$ muss daher von der Kapazität 22 aufgenommen werden. Hierdurch steigt während der generatorischen Leistungsflussphasen die Zwischenkreisspannung $U_Z$ vorübergehend sprunghaft an.

Um zu verhindern, dass - bei vergleichsweise kleiner Auslegung (d.h. vergleichsweise geringer Speicherkapazität) der Kapazität 22 - die Zwischenkreisspannung $U_Z$ einen für den Betrieb des Umrichters 1 zulässigen Maximalbetrag $U_{max}$ (FIG 2) übersteigt, wird nun durch die Steuereinheit 6 der Spannungssollwert $U_0$ jeweils vorauseilend vor dem Beginn einer jeden generatorischen Leistungsflussphase erniedrigt, wodurch auch die Zwischenkreisspannung $U_Z$ abgesenkt wird. Hierdurch wird die Kapazität 22 bis zum Beginn der generatorischen Leistungsflussphase weitgehend entladen. Das Speichervermögen der Kapazität 22 steht somit nahezu vollständig zur Aufnahme der von der Last 17 während der generatorischen Leistungsflussphase eingespeisten Leistung $P_O$ zur Verfügung, wodurch wiederum der Anstieg der Zwischenkreisspannung $U_Z$ während der generatorischen Leistungsflussphase minimiert wird.

In bevorzugter Ausbildung des von der Steuereinrichtung 6 durchgeführten Verfahrens wird der Spannungssollwert $U_O$ an den Verlauf des Absolutbetrags $U_A^+$ (mit $U_A^+ = |U_A|$) der Ausgangsspannung $U_A$ zuzüglich eines vorgegebenen Sicherheitsaufschlags (nachfolgend als Offsetspannung $U_{off}$ bezeichnet) angeglichen:

$$U_0(t) = U_A^+(t) + U_{off}$$

Im oberen Diagramm der FIG 2 ist der Verlauf des Spannungssollwertes $U_0$ - sofern sich dieser nicht mit dem Verlauf der Zwischenkreisspannung $U_Z$ deckt - mit gepunkteter Linie angetragen. Zum Vergleich ist im oberen Diagramm der FIG 2 der Absolutwert $U_A^+$ der Ausgangsspannung $U_A$ mit durchgezogener Linie dargestellt.

FIG 2 ist zu entnehmen, dass die - dort im oberen Diagramm mit strich-punktierter Linie dargestellte - Zwischenkreisspannung $U_Z$ infolge der Regelung überwiegend dem Verlauf des Spannungssollwerts $U_0$ folgt. Lediglich im zeitlichen Umfeld der generatorischen Leistungsflussphasen kommt es zu einer vorübergehenden Überhöhung der Zwischenkreisspannung $U_Z$ gegenüber dem Spannungssollwert $U_0$. Hierbei bleibt der Betrag der Zwischenkreisspannung $U_Z$ infolge der vorherigen Entladung der Kapazität 22 aber stets unter dem Maximalbetrag $U_{max}$.

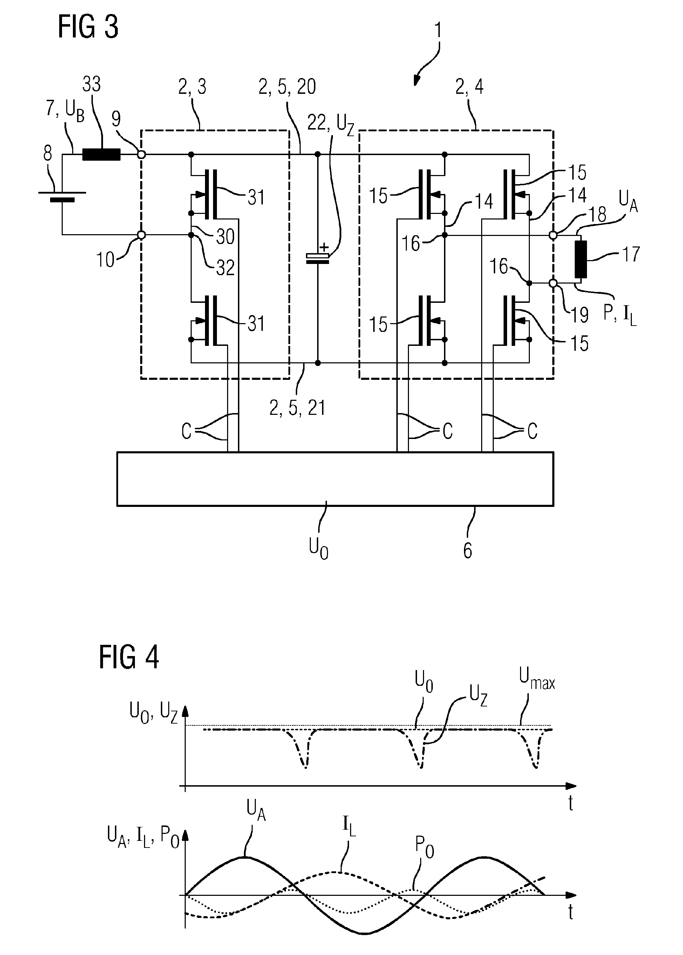

FIG 3 zeigt eine weitere Ausführungsform des Umrichters 1. Diese unterscheidet sich von der in FIG 1 dargestellten Ausführungsform dadurch, dass der Primärschaltkreis 3 des wiederum einzigen Umrichtermoduls 2 als Zweiquadrantensteller ausgebildet ist. Anstelle des Halbleiterschalters 11, der Induktivität 12 und der Diode 13 des Ausführungsbeispiels gemäß FIG 1 umfasst der Primärschaltkreis 3 gemäß FIG 3 eine Halbbrücke 30 mit zwei Halbleiterschaltern 31, die in Reihe zueinander zwischen die Plusschiene 20 und die Minusschiene 21 des Zwischenkreises 5 geschaltet sind. Die Eingangsklemme 9 ist hierbei direkt mit der Pulsschiene 20 des Zwischenkreises 5 verschaltet. Die Eingangsklemme 10 ist dagegen mit einem Mittelabgriff 32 zwischen den Halbleiterschaltern 31 der Halbbrücke 30 verschaltet.

In der Ausführung gemäß FIG 3 wird der Primärschaltkreis 3 als Hochsetzsteller betrieben. Der Primärschaltkreis 3 wirkt hierzu mit einer der Eingangsklemme 9 im Netz 7 vorgeschalteten Induktivität 33 zusammen (die abweichend von der Darstellung gemäß FIG 3 allerdings auch in den Primärschaltkreis 3 integriert sein kann).

Im Unterschied zu dem Primärschaltkreis 3 gemäß FIG 1 ist der Primärschaltkreis 3 im Ausführungsbeispiel gemäß FIG 3 sowohl zur Aufnahme von Leistung aus dem Netz 7 als auch zu Rückspeisung von Leistung in das Netz 7 geeignet. Der Umrichter 1 kann daher im Ausführungsbeispiel gemäß FIG 3 nicht nur im überwiegend motorischen Betrieb gefahren werden, sondern auch in einem überwiegend generatorischen Betrieb. Der überwiegend generatorische Betrieb des Umrichters 1 ist dabei dadurch gekennzeichnet, dass dem Modul 2 über mehrere Perioden der Ausgangsspannung $U_A$ mehr Ausgangsleistung $P_O$ von der Last 17 zugeführt als an diese abgegeben wird. Zumindest ein Teil dieser aufgenommenen Ausgangsleistung $P_O$ wird dabei von dem Umrichter 1 in das Netz 7 zurückgespeist.

Solche überwiegend generatorischen Betriebsphasen treten bei einem Antriebssystem für ein Elektrofahrzeug beispielsweise dann auf, wenn der Antriebsmotor zum Abbremsen des Fahrzeugs herangezogen wird. Die kinetische Energie des Fahrzeugs wird hierbei zumindest teilweise in elektrische Energie rekuperiert.

Je nachdem, ob der Umrichter 1 im Ausführungsbeispiel gemäß FIG 3 überwiegend motorisch oder überwiegend generatorisch betrieben wird, schaltet die Steuereinrichtung 6 beim Ablauf des darin implementierten Steuerprogramms zwischen zwei verschiedenen Steuermodi um. Der im überwiegend motorischen Betrieb des Umrichters 1 herangezogene Steuermodus gleicht hierbei dem anhand von FIG 2 beschriebenen Verfahren.

Der im überwiegend generatorischen Betrieb des Umrichters 1 von der Steuereinrichtung 6 herangezogene Steuermodus ist dagegen anhand von FIG 4 näher dargestellt. Wie daraus ersichtlich, setzt die Steuereinrichtung 6 hierbei den Spannungssollwert $U_0$ konstant auf einen Wert, der im Wesentlichen dem zulässigen Maximalwert $U_{max}$ entspricht, letzteren aber vorzugsweise geringfügig (beispielsweise um maximal 5%) unterschreitet.

Wie aus FIG 4 ersichtlich ist, folgt die Zwischenkreisspannung $U_Z$ infolge der Regelung wiederum weitgehend dem Spannungssollwert $U_0$ und nimmt somit einen dem Maximalbetrag $U_{max}$ im Wesentlichen entsprechenden Wert an, so dass die Kapazität 22 in einen Volladezustand gebracht wird. Zu vorübergehenden Einbrüchen der Zwischenkreisspannung $U_Z$ (und somit zu erheblichen Abweichungen der Zwischenkreisspannung $U_Z$ gegenüber dem Spannungssollwert $U_0$) kommt es lediglich während kurzzeitiger motorischer Leistungsflussphasen. Der in diesen Phasen zur Last 17 hin gerichtete Leistungsfluss kann hierbei ausschließlich aus der Kapazität 22 zur Verfügung gestellt werden, so dass eine Umkehr des Leistungsflusses im Primärschaltkreis 3 nicht notwendig ist.

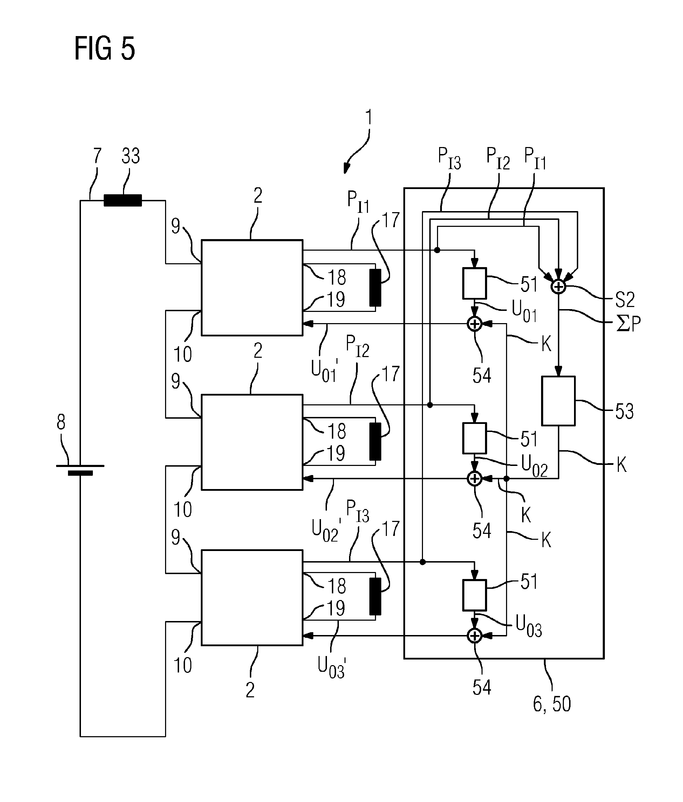

In FIG 5 ist schließlich eine dritte Ausführungsform des Umrichters 1 gezeigt. In dieser Ausführungsform umfasst der Umrichter 1 drei Umrichtermodule 2, die primärseitig in Reihe in das Netz 7 geschaltet sind. Jedes Modul 2 entspricht hierbei von seinem inneren Aufbau her dem Modul 2 des Umrichters gemäß FIG 3.

Als Last 17 ist an jedes der drei Module 2 vorzugsweise jeweils eine Phasenwicklung eines dreiphasigen Elektromotors angeschlossen.

Der Umrichter 1 umfasst in der Ausführung gemäß FIG 5 als Teil der Steuereinrichtung 6 eine Zentralsteuereinheit 50, die modulübergreifende Steuerprozesse durchführt. Die Zentralsteuereinheit 50 ist vorzugsweise durch einen Mikrocontroller mit einem darin softwaretechnisch implementierten Steuerprogramm gebildet. Zusätzlich umfasst jedes Modul 2 eine (nicht explizit dargestellte) modulinterne Steuereinheit, die die eigentliche Regelung der jeweiligen Zwischenkreisspannung $U_Z$ vornimmt.

Bei dem Umrichter 1 gemäß FIG 5 wird das im Zusammenhang mit FIG 3 und FIG 4 beschriebene Steuerverfahren für jedes Modul 2 individuell durchgeführt. Für jedes Modul 2 wird dabei der Istwert der jeweiligen (Eingangs-)Leistung $P_{I1}$, $P_{I2}$ bzw. $P_{I3}$ der Zentralsteuereinheit 50 und hier einer jeweils modulspezifischen Spannungssteuerung 51 zugeführt, die in Abhängigkeit der jeweiligen Leistung $P_{I1}$, $P_{I2}$ bzw. $P_{I3}$ einen modulspezifischen Spannungssollwert $U_{01}$, $U_{02}$ bzw. $U_{03}$ für das jeweils zugehörige Modul 2 bestimmt. Die Eingangsleistungen $P_{I1}$, $P_{I2}$, $P_{I3}$ werden hierbei von dem jeweiligen Submodul 2 (oder alternativ von der Zentralsteuereinheit 50) jeweils aus der Stromstärke des im Spannungsnetz 7 fließenden Stroms, der Zwischenkreisspannung $U_Z$ des jeweiligen Moduls 2 sowie aus dem Aussteuergrad der Halbleiterschalter 31 des Primärschaltkreises 3 des jeweiligen Moduls 2 berechnet.

Parallel hierzu werden die modulspezifischen Leistungen $P_{I1}$, $P_{I2}$, $P_{I3}$ einem Additionsglied 52 der Zentralsteuereinheit 50 zugeführt, das hieraus eine Summenleistung $\Sigma P$ gemäß

$$\Sigma P = P_{I1} + P_{I2} + P_{I3}$$

berechnet. Die Summenleistung $\Sigma P$ wird in einem nachgeschalteten (Gesamtleistungs-)Regler 53 mit einem vorgegebenen Gesamtleistungssollwert verglichen. Anhand der resultierenden Gesamtleistungsdifferenz bestimmt dieser Regler 53 einen Korrekturterm K zur gemeinsamen Korrektur aller modulspezifischen Spannungssollwerte $U_{01}$, $U_{02}$ und $U_{03}$. Der Korrekturterm K wird hierbei in drei, jeweils einem Modul 2 zugeordneten Additionsgliedern 54 jeweils mit dem diesem Modul 2 zugeordneten Spannungssollwert $U_{01}$, $U_{02}$ bzw. $U_{03}$ addiert. Ein aus dieser Addition jeweils resultierender modifizierter Spannungssollwert $U_{01}'$, $U_{02}'$ bzw. $U_{03}'$ wird zur Regelung der modulspezifischen Zwischenkreisspannung $U_Z$ an das jeweilige Modul 2 zurückgeführt.

Der Korrekturterm K wird dabei von dem Gesamtleistungsregler 53 derart bestimmt, dass die von den Modulen 2 in Summe aus dem Netz 7 gezogene (Eingangs-)Leistung an den Gesamtleistungssollwert angeglichen wird. Bei konstantem Gesamtleistungssollwert wird somit durch die Steuereinrichtung 6 sichergestellt, dass die Module 2 in Summe eine im Wesentlichen konstante Leistungsaufnahme zeigen.

Die in FIG 5 dargestellten Komponenten der Steuereinrichtung 6, d.h. die Spannungssteuerungen 51, Additionsglieder 52 und 54 sowie der Gesamtleistungsregler 53 sind vorzugsweise softwaretechnisch implementiert. Der in FIG 5 gezeigte Umrichter 1 und das zugehörige Regelverfahren können im Rahmen der Erfindung ohne Weiteres auf beliebig viele Module 2 erweitert werden.

Auch im Übrigen ist der Umfang der Erfindung nicht auf die dargestellten Ausführungsbeispiele beschränkt. Vielmehr können weitere Ausführungsbeispiele der Erfindung von dem Fachmann aus der vorstehenden Beschreibung abgeleitet werden. Insbesondere können die anhand der Ausführungsbeispiele beschriebenen Einzelmerkmale auch in anderer Weise kombiniert werden, ohne von dem Gegenstand der Erfindung abzuweichen. Des Weiteren können einzelne Merkmale der Ausführungsbeispiele weggelassen oder ergänzt werden.

**Patentansprüche**

1. Verfahren zum Betrieb eines Umrichters (1) mit mindestens einem Umrichtermodul (2), das

   - einen Primärschaltkreis (3) zum Anschluss an ein Spannungsnetz (7),

   - einen Sekundärschaltkreis (4) zum Anschluss an eine Last (17),
   - einen diesen Schaltkreisen (3,4) zwischengeschalteten Spannungszwischenkreis (5) und
   - eine in den Spannungszwischenkreis (5) geschaltete Zwischenkreiskapazität (22)
   umfasst, wobei verfahrensgemäß
   - die über der Zwischenkreiskapazität (22) abfallende Zwischenkreisspannung ($U_Z$) durch Steuerung des Primärschaltkreises (3) auf einen vorgegebenen Spannungssollwert ($U_0$, $U_{01}$-$U_{03}$) geregelt wird, und
   - wobei der Spannungssollwert ($U_0$,$U_{01}$-$U_{03}$) in Abhängigkeit von der Richtung des Leistungsflusses in dem Sekundärschaltkreis (4) variabel vorgegeben wird.

2. Verfahren nach Anspruch 1, wobei der Spannungssollwert ($U_0$, $U_{01}$-$U_{03}$) bei überwiegend motorischem Leistungsfluss vorauseilend zu dem Beginn einer generatorischen Leistungsflussphase erniedrigt wird.

3. Verfahren nach Anspruch 2, wobei der Spannungssollwert ($U_0$, $U_{01}$-$U_{03}$) dem zeitabhängigen Absolutwert ($U_A^+$) der von dem Sekundärschaltkreis (4) eingestellten Ausgangsspannung ($U_A$) nachgeführt wird.

4. Verfahren nach Anspruch 2, wobei der Spannungssollwert ($U_0$, $U_{01}$-$U_{03}$) auf einen Maximalwert ($U_{max}$) abgesenkt wird, der anhand der Blindleistung der Last (17) und des Kapazitätswerts der Zwischenkreiskapazität (22) derart berechnet wird, dass die Zwischenkreisspannung ($U_Z$) während der generatorischen Leistungsflussphase einen zulässigen Maximalwert ($U_{max}$) der Zwischenkreisspannung ($U_Z$) gerade nicht überschreitet.

5. Verfahren nach einem der Ansprüche 1 bis 4, wobei bei überwiegend generatorischem Leistungsfluss der Spannungssollwert ($U_0$, $U_{01}$-$U_{03}$) exakt oder zumindest näherungsweise auf einen zulässigen Maximalwert ($U_{max}$) der Zwischenkreisspannung ($U_Z$) angehoben wird.

6. Verfahren zum Betrieb eines Umrichters (1) mit mehreren Umrichtermodulen (2), von denen jedes

   - einen Primärschaltkreis (3) zum Anschluss an ein Spannungsnetz (7),
   - einen Sekundärschaltkreis (4) zum Anschluss an eine Last (17),
   - einen diesen Schaltkreisen (3,4) zwischengeschalteten Spannungszwischenkreis (5) sowie
   - eine in den Spannungszwischenkreis (5) geschaltete Zwischenkreiskapazität (22) umfasst, wobei verfahrensgemäß ein modulspezifischer

Spannungssollwert ($U_{01}$-$U_{03}$) für jedes Umrichtermodul (2) individuell nach dem Verfahren nach einem der Ansprüche 1 bis 5 bestimmt wird.

7.  Verfahren nach Anspruch 6, wobei alle modulspezifischen Spannungssollwerte ($U_{01}$-$U_{03}$) nach Maßgabe eines gemeinsamen Korrekturterms (K) modifiziert werden, so dass die Summenleistung ($\Sigma P$) aller Umrichtermodule (2) auf einen vorgegebenen Gesamtleistungssollwert geregelt wird.

8.  Umrichter (1)

    - mit mindestens einem Umrichtermodul (2), das

        - einen Primärschaltkreis (3) zum Anschluss an ein Spannungsnetz (7),
        - einen Sekundärschaltkreis (4) zum Anschluss an eine Last (17),
        - einen diesen Schaltkreisen (3,4) zwischengeschalteten Spannungszwischenkreis (5) und

        - eine in den Spannungszwischenkreis (5) geschaltete Zwischenkreiskapazität (22) umfasst, sowie
        - mit einer Steuereinrichtung (6) zur Ansteuerung des Primärschaltkreises (3), wobei die Steuereinrichtung (6) zur Durchführung des Verfahrens nach einem der Ansprüche 1 bis 5 eingerichtet ist.

9.  Umrichter (1)

    - mit mehreren Umrichtermodulen (2), von denen jedes

        - einen Primärschaltkreis (3) zum Anschluss an ein Spannungsnetz (7),
        - einen Sekundärschaltkreis (4) zum Anschluss an eine Last (17),
        - einen diesen Schaltkreisen (3,4) zwischengeschalteten Spannungszwischenkreis (5) und
        - eine in den Spannungszwischenkreis (5) geschaltete Zwischenkreiskapazität (22)

        umfasst, sowie
        - mit einer Steuereinrichtung (6) zur Ansteuerung des Primärschaltkreises (3), wobei die Steuereinrichtung (6) zur Durchführung des Verfahrens nach einem der Ansprüche 6 oder 7 eingerichtet ist.

## FIG 1

## FIG 2

**FIG 3**

**FIG 4**

# FIG 5

Europäisches
Patentamt

European
Patent Office

Office européen
des brevets

**EUROPÄISCHER RECHERCHENBERICHT**

Nummer der Anmeldung

EP 13 15 3497

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/159007 A1 (KING ROBERT D [US] ET AL KING ROBERT DEAN [US] ET AL) 12. Juli 2007 (2007-07-12) * Absatz [0029] - Absatz [0047]; Abbildung 3 * ----- | 1 | INV. H02J7/34 B60L7/10 |
| X | EP 1 883 156 A2 (FANUC LTD [JP]) 30. Januar 2008 (2008-01-30) * das ganze Dokument * ----- | 1 | |

**RECHERCHIERTE SACHGEBIETE (IPC)**

H02J
B60L

Der vorliegende Recherchenbericht wurde für alle Patentansprüche erstellt

| Recherchenort | Abschlußdatum der Recherche | Prüfer |
|---|---|---|
| Den Haag | 6. Juni 2013 | Mapp, Graham |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
  Dokument

EPO FORM 1503 03.82 (P04C03)

**EP 2 763 276 A1**

**ANHANG ZUM EUROPÄISCHEN RECHERCHENBERICHT**
**ÜBER DIE EUROPÄISCHE PATENTANMELDUNG NR.**

EP 13 15 3497

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2013

| Im Recherchenbericht angeführtes Patentdokument | Datum der Veröffentlichung | Mitglied(er) der Patentfamilie | Datum der Veröffentlichung |
|---|---|---|---|
| US 2007159007 A1 | 12-07-2007 | AT 489758 T | 15-12-2010 |
| | | CN 101356707 A | 28-01-2009 |
| | | EP 1977495 A2 | 08-10-2008 |
| | | JP 2009523000 A | 11-06-2009 |
| | | JP 2012196131 A | 11-10-2012 |
| | | US RE43956 E1 | 05-02-2013 |
| | | US 2007159007 A1 | 12-07-2007 |
| | | WO 2007081495 A2 | 19-07-2007 |
| EP 1883156 A2 | 30-01-2008 | CN 101114807 A | 30-01-2008 |
| | | EP 1883156 A2 | 30-01-2008 |
| | | JP 2008035588 A | 14-02-2008 |
| | | US 2008024079 A1 | 31-01-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **LUKAS LAMBERTZ et al.** Modularer Hochfrequenzumrichter für Fahrzeugantriebe. *EMA,* 08. September 2010